# EUROPEAN PATENT SPECIFICATION

(11) **EP 1 334 008 B1**
(45) Date of publication and mention of the grant of the patent: **30.07.2008**
(21) Application number: 01977017.1
(22) Date of filing: 18.10.2001
(51) Int. Cl.: B60R 1/00, G02B 27/01

(54) **A NIGHT VISION DEVICE FOR A VEHICLE**
NACHTSICHTVORRICHTUNG FÜR EIN FAHRZEUG
DISPOSITIF DE VISION NOCTURNE POUR VEHICULE

(30) Priority: 26.10.2000 SE 0003943
(43) Date of publication of application: 13.08.2003
(60) Divisional application: 04025960.8
(73) Proprietor: AUTOLIV DEVELOPMENT AKTIEBOLAG, 447 83 Vargarda (SE); FLIR Systems, Inc, Portland, OR 97224 (US)
(72) Inventor: KÄLLHAMMER, Jan-Erik, S-417 64 Göteborg (SE); ERIKSSON, Dick, S-441 35 Alingsas (SE); KARLSSON, Lars, S-183 41 Täby (SE); STRAAT, Staffan, S-182 46 Enebyberg (SE)
(74) Representative: Parry, Simon James
(86) International application number: PCT/SE2001/002283
(87) International publication number: WO 2002/036389

(56) References cited:
- EP-A1- 0 686 865
- EP-A2- 1 024 057
- DE-A1- 3 900 667
- JP-A- 6 048 247
- JP-A- 9 315 225

## Description

**THE PRESENT INVENTION** relates to a night vision device for a vehicle such as a motor vehicle.

It has been proposed previously to provide a night vision device in a vehicle such as an automobile. The purpose of the night vision device is to enhance the vision of the driver in night conditions.

Various night vision devices have been proposed before. US-A-5,414,439 describes a night vision arrangement which utilises a "head-up" display. A motor vehicle is provided with an infra-red camera positioned to view the roadway in front of the vehicle. The camera generates a video signal which is passed to a "head-up" display of the type utilised in combat aircraft. In the embodiment described, the windshield of the motor vehicle or a semi-transmitter is utilised as a combiner to combine the image of the road ahead, as viewed through the windshield by the driver, and a virtual image of the road ahead from an image generator which receives the video signal from the camera.

In US-A-5,414,439 the infra-red camera is mounted in a fixed position to provide an image of the view in the front of the vehicle. Also the camera has a fixed focal length. Consequently, when cornering the vehicle, that is to say when turning the vehicle to the right or to the left, the camera will always point in a direction aligned with the longitudinal axis of the vehicle. However, there is a need for the driver of the vehicle to view the environment into which the vehicle is moving which will be located either to the left or to the right of the fixed field of view of the camera.

JP-A-0 6048247 discloses the features of the preamble of claim 1 and describes a vehicle mounted infra-red image display arrangement, and in this arrangement the precise field of view that is displayed to the driver of the vehicle is dependent upon the position of the front or steering wheels of the vehicle. However, even in an arrangement such as this, it is difficult to ensure that the appropriate image is displayed, since the field of view that is of interest to the driver is not necessarily aligned with the rolling direction of the steering wheels of the vehicle.

JP 09315225 A discloses an infra-red photographing arrangement for a vehicle. The arrangement comprises an infra-red camera which takes a photograph of an infra-red image in front of the vehicle, and which is turned in the direction in which the vehicle is steered. The image recorded by the camera is displayed on a display within the vehicle for the driver to see.

DE 3,900,667 discloses a video camera mounted to a vehicle which is configured to record an image from outside of the vehicle and transmit it to a display within the vehicle to be viewed by the driver. The video camera is remotely movable by the driver of the vehicle.

When a motor vehicle is being driven quickly, driver of the vehicle tends to concentrate on the road ahead of the vehicle, but, in contrast, when the vehicle is travelling slowly, for example in a built-up area, the driver usually pays attention to situations that may develop on either side of the roadway. Thus the driver may be particularly conscious of pedestrians who are not in the roadway, but who may step into the roadway in front of the vehicle. Thus, when a driver is driving quickly, the driver tends to concentrate on a relatively narrow angular field of view, whereas when the vehicle is driving more slowly, the driver tends to concentrate on a wider angular field of view. If the image provided by a night vision arrangement of the type discussed above were to be utilised to provide the wide field of view, whilst providing a sufficiently large image of the road ahead for fast driving, with a fixed focal length of the lens of the infra-red camera, a very wide display would have to be provided, which may prove to be impractical in many vehicle installations.

The present invention seeks to provide an improved night vision arrangement.

According to one aspect of this invention there is provided a night vision arrangement for a vehicle, the night vision arrangement including an infra-red-sensitive camera fixed to the motor vehicle to capture an image of the roadway in front of the vehicle, the image having a predetermined horizontal angular field of view, the camera generating a video signal representing the image, the arrangement further including a display unit adapted to display at least part of the captured image to the driver of the vehicle, characterised in that the arrangement further comprises a signal processing unit adapted to process the video signal, and a sensor unit adapted to sense one or more parameters of the movement of the vehicle, and to provide a control signal, the arrangement being such that, in use, the signal processing unit electronically processes the video signal so that the field of view of the image displayed by the display unit is selected in accordance with the said control signal, wherein the signal processing unit is adapted to process the video signal so that the angular extent of the field of view of the image displayed by the display unit is related to the speed of the vehicle, the sensor being adapted to sense speed, and wherein part of the image captured by the camera is selected for display, that part being selected in dependence upon the direction of movement of the vehicle, the sensor being adapted to sense the direction of movement of the vehicle.

Conveniently the sensor includes means to sense the rolling direction of the steering wheel relative to the vehicle.

Advantageously the sensor senses the instantaneous position of the vehicle in a co-ordinate system to derive a signal corresponding to the driving direction and/or speed of the vehicle.

Preferably the means for sensing the instantaneous position of the vehicle incorporate a GPS sensor arrangement.

Conveniently the display unit is a monitor which displays an image directly to the vehicle operator.

Alternatively the display unit is a head-up display unit.

Preferably the head-up display unit incorporates a mirror for reflecting a virtual image to the driver of the vehicle.

Conveniently the mirror is a semi-transparent mirror, enabling the operator to view the reflected image and, simultaneously, to see a real image through the mirror.

In order that the invention may be more readily understood, and so that further features thereof may be appreciated, the invention will now be described, by way of example, with reference to the accompanying drawings in which:
FIGURE 1 is a block schematic view of one embodiment of the invention,
FIGURE 2 is a corresponding block schematic view of a second embodiment of the invention,
FIGURE 3 is a diagrammatic plan view of a vehicle provided with a night vision arrangement in accordance with the invention,
FIGURE 4 is a diagrammatic view of a display provided on the vehicle of Figure 3 in one condition,
FIGURE 5 is a view corresponding to Figure 4 illustrating the display in another condition,
FIGURE 6 is a diagrammatic view, corresponding to Figure 3, of a vehicle provided with another system in accordance with the invention, and
FIGURE 7 is a view, corresponding to Figure 4, showing the display of the embodiment of Figure 6.

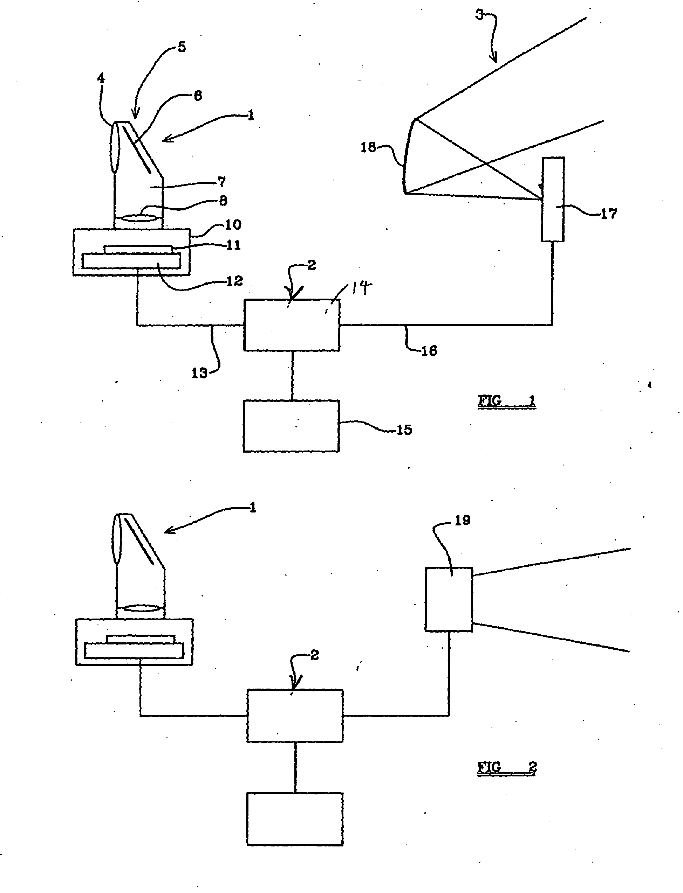

Referring initially to Figure 1 of the accompanying drawings, a night vision system for a motor vehicle comprises a camera 1, a signal processing arrangement 2 and a display unit 3.

The camera 1 is provided with a lens 4. Located behind the lens 4, in alignment with the optical axis of the lens, is a beam deflector 5 which is constituted by an inclined mirror 6. The beam deflector is provided in a hollow tubular neck 7, which contains a focusing lens 8 which may be adjusted by means of a focusing ring 9. The neck 7 is connected to a lower housing 10. The housing 10 contains an infra-red sensor element 11, which may be a charge-coupled sensor element, which is mounted on an electronic unit 12.

It is to be appreciated, therefore, that in use of the camera 1, the camera will be positioned so that the image viewed by the lens 4 is an image of the roadway in front of the vehicle. The image, after being deflected by the beam deflector 5, is focussed, by the focusing lens 8, on to the planar infra-red sensor 11. The focus, and thus the field of view, of the camera may be adjusted by a adjusting the focusing ring 9 to provide an "optical zoom" effect in response to a central signal from the sensor 15.

The camera 1 provides a video output signal on an output lead 13. The output lead 13 is connected to a signal processor 14 forming part of the signal processor arrangement 2. The signal processor 14 is connected to receive an input control signal from a sensor unit 15. The sensor unit 15 may be simply a speed sensor adapted to sense the speed of the vehicle. The speed sensor may be connected to the speedometer of the vehicle, or may be connected to a wheel speed sensor forming part of an ABS system. Alternatively, the sensor 15 may be responsive to the position of the front or steering wheels of the vehicle, or an element associated with the steering wheels of the vehicle, such as a tie rod or the steering wheel shaft. Alternatively again, the sensor 15 may be a sensor which can sense the instantaneous position of the vehicle in a co-ordinate system, thus providing signals corresponding to the instantaneous speed and driving direction of the vehicle. Thus, for example, the sensor may be a GPS (Global Positioning System) sensor. The GPS system utilises signals from a number of geo-stadonary satellites which transmit accurate timing system. A GPS sensor processes the signals that it receives from the satellites and can provide very accurate indications as to the position of the sensor. Thus it is envisaged that the sensor 15 may incorporate a GPS sensor to process signals received from the satellite system to determine the position of the vehicle, with the sensor 15 including a processor to determine successive positions of the vehicle and to determine the instantaneous speed and driving direction of the vehicle.

It is thus to be appreciated that the sensor 15 may include one or more sensors of the types generally discussed above, and the sensor 15 will provide a control signal as an input to the signal processor 14, that input being indicative of the speed of the vehicle and/or the direction of driving of the vehicle.

The signal processor unit has an output 16 which is connected to an image generator 17 forming part of the display unit 3. The image generator 17 may be a cathode-ray device, or any other conventional form of image generator. The image generator 17 is positioned appropriately with regard to a semi-silvered aspherical mirror 18 which forms part of a conventional head-up display unit. The mirror 18 may be mounted on, or may form part of the windshield of a vehicle and may be positioned so that the virtual image that is displayed on the mirror 18, from the image generator 17, as viewed by the driver of the vehicle, is super-imposed on the ordinary view of the roadway in front of the vehicle enjoyed by the driver of the vehicle.

As will be described below, in embodiments of the invention, the signal processor 14 processes the signal received from the camera 1, so that the image displayed by the display unit 3 is appropriate, taking into account the speed and/or direction of driving of the vehicle.

Figure 2 illustrates an alternative embodiment of the invention. The camera 1 and the signal processing unit 2 are as described above with regard to Figure 1, and thus these parts of the system will not be re-described. In the embodiment of Figure 2, instead of a head-up display unit as described in Figure 1, a simple monitor or visual display unit 19 is provided which displays the image obtained from the camera as processed by the signal processing unit. The monitor or visual display unit 19 will be positioned so as to be readily viewable by the driver of a vehicle.

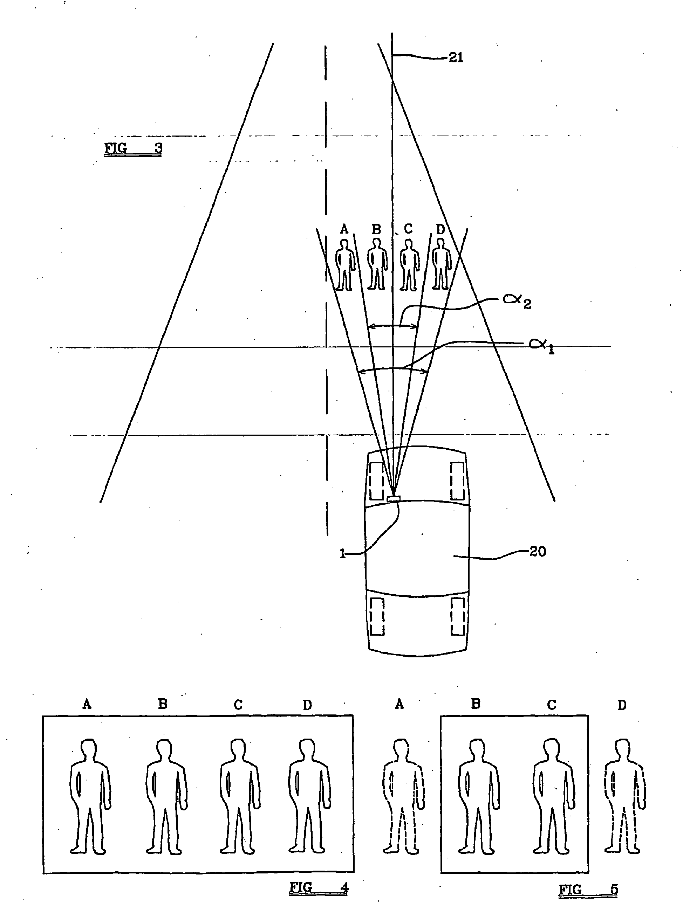

Referring now to Figure 3, a vehicle 21 is illustrated schematically from above, and the camera 1, as described above, is shown mounted in position on a vehicle. The camera is mounted in a fixed position, with the optical axis of the lens 4 aligned with the longitudinal axis of the vehicle 21, so that the camera can capture an infra-red image of the road in front of the vehicle.

In the embodiment of Figure 3, the sensor 15 provides a signal to the signal processor 14 which indicates the speed of the vehicle, and the signal processor 14 processes the signal representative of the image so that the horizontal width of the field of view of the image displayed is decreased as the speed of the vehicle increases.

When the vehicle is stationary, or travelling at a very slow speed, the signal processor 14 processes the signal from the camera 1 so that the display unit 3 displays a very wide image of the roadway in front of the vehicle. This image may have an angular field of view of α 1, as shown in Figure 3.

For purposes of explanation, Figure 3 illustrates schematically four pedestrians standing in a roadway in front of the vehicle, identified as pedestrians A, B, C and D. With the relatively wide angular field of view a 1 of the displayed image when the vehicle is stationary or travelling slowly, all four pedestrians are shown in the image presented to the driver of the vehicle by the image display unit 3, as shown in Figure 4.

However, as the speed of the vehicle increases, the signal processor 14 reduces the angle of the field of view of the image that is presented on the display, whilst simultaneously magnifying the image so that the image still completely fills the display. Thus, as shown in Figure 5, only the central pair of pedestrians B and C are illustrated when the vehicle is travelling swiftly, the pedestrians A and D no longer being present in the displayed image.

It is thus to be appreciated that when the vehicle is travelling slowly, for example in a built-up area, the image displayed will be wide enough to include any cycle tracks, walkways or the like, located at the side of the roadway that the vehicle is driving along, so that the driver of the vehicle may be alerted to potentially dangerous situations, such as pedestrians about to walk into the roadway. However, when the vehicle is travelling swiftly, a relatively narrow field of view is presented to the driver of the vehicle, showing the roadway in front of the vehicle.

In the embodiment described above, the signal processor 14 electronically processes the signal to select the field of view which is displayed on the display 17. It is to be appreciated, however, that in a modified embodiment of the invention the field of view displayed on the display 17 may be adjusted by altering the focus of the lens 8 using the focusing ring 9, to provide a "optical zoom" effect, so that the optics of the camera are adjusted to ensure that the appropriate image is displayed.

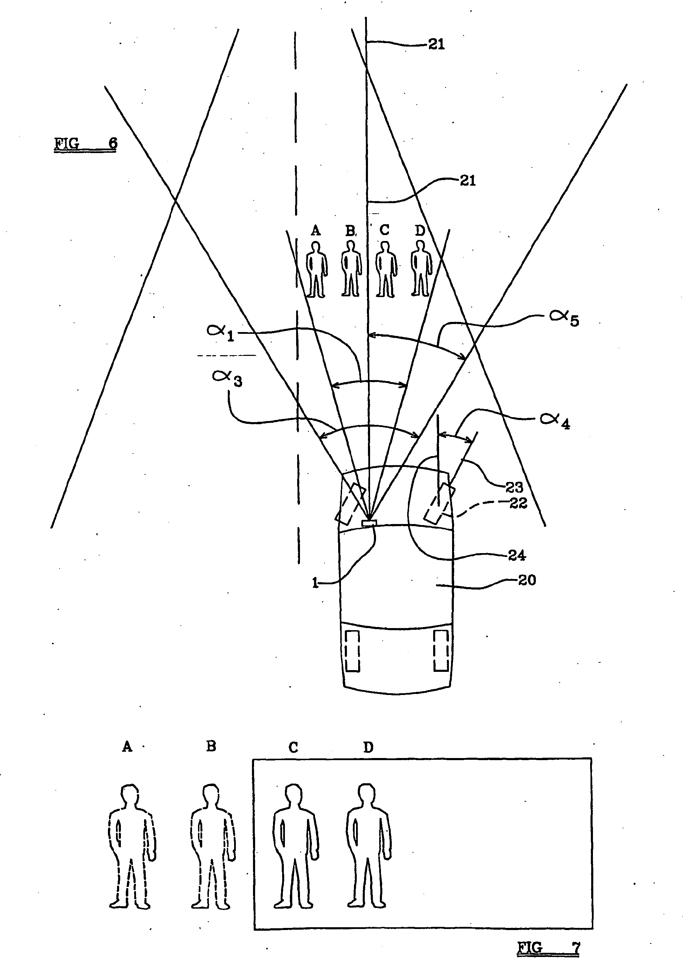

Figure 6 illustrates a further embodiment of the invention. In this embodiment of the invention a camera 1 of the type described above is mounted in a fixed position on a vehicle 20 with the optical axis 21 of the camera aligned with the longitudinal axis of the vehicle.

The camera is adapted to receive an optical image over a very wide angular field α 3. Ordinarily the image displayed by the display device will be selected so that the image corresponds to a field of view having an angular width α 1, with that image being centred on the optical axis 21 of the camera. Thus, where four notional pedestrians A, B, C and D are shown standing in front of the motor vehicle 20, all four pedestrians will be within the image displayed by the display unit, if the vehicle is travelling straight.

However, Figure 6 illustrates the vehicle in a "cornering" situation. The steering wheels 22 provided at the front of the vehicle have been turned so that the rolling direction 23 of the wheel is off-set by an angle α 4 relative to the initial rolling direction 24 of the wheels 22 when the steering wheels are aligned with the longitudinal axis of the vehicle for straight driving. The vehicle is thus cornering.

The sensor unit 15, in this embodiment, senses the angle α 4 and controls the signal processor 14 so that the image which is displayed by the display unit is off-set from the optical axis 21, so as to display the environment into which the vehicle will move. Thus, the angle of field of view now displayed is shown as angle α 5. Figure 7 illustrates the display, showing that the display only shows the two pedestrians C, D, provided at the end of the row of pedestrians, with the other two pedestrians A, B, not being displayed.

It is thus to be appreciated that, in the embodiment shown in Figure 6, the field of view that is displayed is determined in accordance with the angular position of the rolling direction of the front steering wheels 22 of the vehicle.

In a similar way, the field of view that is displayed may be determined from the driving direction of the vehicle, for example as determined from a GPS sensor.

It is to be appreciated that various modifications may be effected to the arrangement described above. In one embodiment of the invention, the signal processor 14 operates so that when the vehicle corners at low speed, the width of the field of view presented on the display increases while the field of view remains aligned with the optical axis 21, whereas when cornering at a higher speed, the overall angular width of the field of view is maintained, but the field of width is off-set from the optical axis 21. The angle of off-set from the optical axis 21 is preferably equal to the angle α 4.

In the present Specification "comprise" means "includes or consists of" and "comprising" means "including or consisting of".

## Claims

1. A night vision arrangement for a vehicle, the night vision arrangement including an infra-red-sensitive camera (1) fixed to the motor vehicle to capture an image of the roadway in front of the vehicle, the image having a predetermined horizontal angular field of view, the camera (1) generating a video signal representing the image, the arrangement further including a display unit (3) adapted to display at least part of the captured image to the driver of the vehicle, **characterised in that** the arrangement further comprises a signal processing unit (14) adapted to process the video signal, and a sensor unit (15) adapted to sense one or more parameters of the movement of the vehicle, and to provide a control signal, the arrangement being such that, in use, the signal processing unit (14) electronically processes the video signal so that the field of view (α₁, α₂) of the image displayed by the display unit (3) is selected in accordance with the said control signal, wherein the signal processing unit (14) is adapted to process the video signal so that the angular extent of the field of view of the image displayed by the display unit (3) is related to the speed of the vehicle, the sensor (15) being adapted to sense speed, and wherein part of the image captured by the camera (1) is selected for display, that part being selected in dependence upon the direction of movement of the vehicle, the sensor (15) being adapted to sense the direction of movement of the vehicle.

2. An arrangement according to Claim 1 wherein the sensor (15) includes means to sense the rolling ditection (23) of the steering wheels relative to the vehicle.

3. A device according to Claim 1 wherein the sensor (15) senses the instantaneous position of the vehicle in a co-ordinate system to derive a signal corresponding to the driving direction and/or speed of the vehicle.

4. A device according to Claim 1 wherein the means for sensing the instantaneous position of the vehicle incorporate a GPS sensor arrangement.

5. An arrangement according to any one of the preceding Claims wherein the display unit (3) is a monitor which displays an image directly to the vehicle operator.

6. An arrangement according to any one of claims 1 to 4, wherein the display unit is a head-up display unit.

7. An arrangement according to Claim 6 wherein the head-up display unit incorporates a mirror (18) for reflecting a virtual image to the driver of the vehicle.

8. An arrangement according to Claim 7 wherein the mirror (18) is a semi-transparent mirror, enabling the operator to view the reflected image and, simultaneously, to see a real image through the mirror.

## Patentansprüche

1. Eine Nachtsichtanordnung für ein Fahrzeug, wobei die Nachtsichtanordnung eine an dem Motorfahrzeug befestigte Infrarot-sensitive Kamera (1) zum Aufnehmen eines Bildes der Straße vor dem Fahrzeug umfasst, wobei das Bild ein vorbestimmtes horizontales Winkelblickfeld aufweist, wobei die Kamera (1) ein das Bild repräsentierendes Videosignal erzeugt, wobei die Anordnung weiterhin eine Displayeinheit (3) umfasst, die zum Darstellen mindestens eines Teils des aufgenommenen Bildes an den Fahrer des Fahrzeugs eingerichtet ist, **dadurch gekennzeichnet, dass** die Anordnung weiterhin eine Signalverarbeitungseinheit (14), die zum Verarbeiten des Videosignals eingerichtet ist, und eine Sensoreinheit (15), die zum Erfassen eines oder mehrerer Parameter der Bewegung des Fahrzeugs, und zum Bereitstellen eines Steuersignals, eingerichtet ist, umfasst, wobei die Anordnung so ausgebildet ist, dass, im Betrieb, die Signalverarbeitungseinheit (14) das Videosignal elektronisch verarbeitet, so dass das Blickfeld (α1, α2) des von der Displayeinheit (3) dargestellten Bildes in Übereinstimmung mit dem Steuersignal gewählt wird, wobei die Signalverarbeitungseinheit (14) zum Verarbeiten des Videosignals eingerichtet ist, so dass die Winkelausdehnung des Blickfeldes des von der Displayeinheit (3) dargestellten Bildes in Relation zu der Geschwindigkeit des Fahrzeugs gesetzt wird, wobei der Sensor (15) zur Geschwindigkeitserfassung eingerichtet ist, und wobei ein Teil des von der Kamera erfassten Bildes (1) zum Darstellen ausgewählt wird, wobei dieser Teil in Abhängigkeit von der Richtung der Bewegung des Fahrzeugs ausgewählt wird, wobei der Sensor (15) zum Erfassen der Richtung der Bewegung des Fahrzeugs eingerichtet ist.

2. Eine Anordnung nach Anspruch 1, wobei der Sensor (15) Mittel zum Erfassen der Drehrichtung (23) des Lenkrades relativ zu dem Fahrzeug umfasst.

3. Eine Vorrichtung nach Anspruch 1, wobei der Sensor (15) die momentane Position des Fahrzeugs in einem Koordinatensystem erfasst, um ein Signal entsprechend der Fahrrichtung und/oder der Geschwindigkeit des Fahrzeugs abzuleiten.

4. Eine Vorrichtung nach Anspruch 1, wobei die Mittel zum Erfassen der momentanen Position des Fahrzeugs eine GPS-Sensoranordnung einschließen.

5. Eine Anordnung nach einem der vorangehenden Ansprüche, wobei die Displayeinheit (3) ein Monitor ist, der ein Bild direkt an den Fahrzeugbediener anzeigt.

6. Eine Anordnung nach einem der Ansprüche 1 bis 4, wobei die Displayeinheit eine Head-up-Displayeinheit ist.

7. Eine Anordnung nach Anspruch 6, wobei die Head-up-Displayeinheit einen Spiegel (18) zum Reflektieren eines virtuellen Bildes zu dem Fahrer des Fahrzeugs umfasst.

8. Eine Anordnung nach Anspruch 7, wobei der Spiegel (18) ein semitransparenter spiegel ist, der es dem Bediener ermöglicht, das reflektierte Bild zu betrachten und gleichzeitig ein reales Bild durch den Spiegel zu sehen.

## Revendications

1. Agencement de vision nocturne pour un véhicule, l'agencement de vision nocturne comprenant une caméra (1) sensible à l'infrarouge fixée au véhicule à moteur pour capter une image de la route devant le véhicule, l'image ayant un champ de vision angulaire horizontal prédéterminé, la caméra (1) émettant un signal vidéo représentant l'image, l'agencement comprenant en outre une unité d'affichage (3) conçue pour afficher au moins une partie de l'image captée au conducteur du véhicule, **caractérisé en ce que** l'agencement comprend en outre une unité de traitement du signal (14) conçue pour traiter le signal vidéo et une unité de détection (15) conçue pour détecter un ou plusieurs paramètres du mouvement du véhicule et pour fournir un signal de commande, l'agencement étant tel qu'en fonctionnement, l'unité de traitement du signal (14) traite électroniquement le signal vidéo de façon à ce que le champ de vision (α₁, α₂) de l'image affichée par l'unité d'affichage (3) soit sélectionné en fonction dudit signal de commande, l'unité de traitement du signal (14) étant conçue pour traiter le signal vidéo de façon à ce que l'extension angulaire du champ de vision de l'image affichée par l'unité d'affichage (3) soit relative à la vitesse du véhicule, le capteur (15) étant conçu pour détecter la vitesse, et la partie de l'image captée par la caméra (1) étant sélectionnée pour être affichée, ladite partie étant sélectionnée en fonction de la direction de déplacement du véhicule, le capteur (15) étant conçu pour détecter la direction de déplacement du véhicule.

2. Agencement selon la revendication 1, dans lequel le capteur (15) comprend un moyen de détection de la direction de roulement (23) des roues motrices par rapport au véhicule.

3. Agencement selon la revendication 1, dans lequel le capteur (15) détecte la position instantanée du véhicule dans un système de coordonnées pour dériver un signal correspondant à la direction d'avancée et/ou à la vitesse du véhicule.

4. Dispositif selon la revendication 1, dans lequel le moyen de détection de la position instantanée du véhicule intègre un agencement de capteur GPS.

5. Agencement selon l'une quelconque des revendications précédentes, dans lequel l'unité d'affichage (3) est un moniteur qui affiche directement une image au conducteur du véhicule.

6. Agencement selon l'une quelconque des revendications 1 à 4, dans lequel l'unité d'affichage est une unité d'affichage tête haute.

7. Agencement selon la revendication 6, dans lequel l'unité d'affichage tête haute intègre un miroir (18) pour refléter une image virtuelle au conducteur du véhicule.

8. Agencement selon la revendication 7, dans lequel le miroir (18) est un miroir semi-transparent, permettant au conducteur de voir l'image réfléchie et, simultanément, une image réelle à travers le miroir.
